# EUROPÄISCHE PATENTSCHRIFT

(11) **EP 0 766 881 B1**
(45) Veröffentlichungstag und Bekanntmachung des Hinweises auf die Patenterteilung: **02.09.1998**
(21) Anmeldenummer: 95923272.9
(22) Anmeldetag: 08.06.1995
(51) Int. Cl.: H02J 13/00, H05B 37/02

(54) **STEUERSYSTEM FÜR MEHRERE VERTEILT ANZUORDNENDE VERBRAUCHER, SOWIE VERFAHREN ZUM IN-BETRIEB-SETZEN EINES SOLCHEN STEUERSYSTEMS**
CONTROL SYSTEM FOR SEVERAL DISTRIBUTED CONSUMERS AND PROCESS FOR SETTING SAID CONTROL SYSTEM INTO OPERATION
SYSTEME DE COMMANDE DE PLUSIEURS CONSOMMATEURS REPARTIS DANS L'ESPACE ET PROCEDE DE MISE EN SERVICE DE CE SYSTEME DE COMMANDE

(30) Priorität: 24.06.1994 DE 4422215
(43) Veröffentlichungstag der Anmeldung: 09.04.1997
(73) Patentinhaber: Zumtobel Staff GmbH, 6850 Dornbirn (AT)
(72) Erfinder: GEIGINGER, Joachim, A-6845 Hohenems (AT); WERNER, Walter, A-6850 Dornbirn (AT)
(74) Vertreter: Schmidt-Evers, Jürgen, Dipl.-Ing.
(86) Internationale Anmeldenummer: EP9502218
(87) Internationale Veröffentlichungsnummer: WO9600459

(56) Entgegenhaltungen:
- EP-A- 0 433 527
- WO-A-86/06890
- WO-A-92/02981

## Beschreibung

Die Erfindung betrifft ein Steuersystem für mehrere verteilt anzuordnende Verbraucher, insbesondere Leuchten in einem oder mehreren Räumen, sowie ein Verfahren zum In-Betrieb-Setzen eines solchen Steuersystems.

Die vorliegende Erfindung betrifft eine Verbesserung des bekannten Systems und Verfahrens.

Das in der EP 0 433 527 beschriebene Steuersystem entspricht dem Steuersystem nach dem Oberbegriff des Anspruches 1.

Nach der EP 0 433 527 ist bekannt ein Verfahren zum In-Betrieb-Setzen eines Steuersystems für mehrere verteilt anzuordnende Verbraucher, insbesondere Leuchten in einem oder mehreren Räumen, welche Verbraucher eine gespeicherte Ursprungsadresse enthalten und nach ihrer ohne Rücksicht auf die Ursprungsadresse vorgenommenen Installierung von mindestens einem Befehlsgeber über eine gemeinsame Steuerleitung steuerbar sein sollen, mit folgenden Schritten:
a) der Befehlsgeber fordert alle Verbraucher auf, ihre Ursprungsadresse zu senden und speichert diese Ursprungsadressen;
b) von dem Befehlsgeber wird eine der gespeicherten Ursprungsadressen mit dem Befehl angewählt, daß der zugehörige Verbraucher ein von außen wahrnehmbares Identifizierungssignal abgeben soll,
c) die Gesamtheit der Verbraucher wird von außen auf die Identifizierung des einen Verbrauchers überwacht,
d) nach Identifizierung des einen Verbrauchers wird in den Befehlsgeber eine diesem Verbraucher zugeordnete Betriebsadresse eingegeben, die einer bestimmten Gruppierung und/oder Anordnung der Verbraucher nach der Installierung des Systems Rechnung trägt,
e) der identifizierte Verbraucher wird von dem Befehlsgeber über seine Ursprungsadresse angewählt, und es wird ihm die eingegebene Betriebsadresse zur Speicherung übertragen,
f) die Schritte a) bis e) werden wiederholt, bis an alle Verbraucher eine Betriebsadresse übertragen worden ist.

Der wesentliche Vorteil des bekannten Steuersystems sowie des Verfahrens zum In-Betrieb-Setzen eines solchen Steuersystems ist, daß die Verbraucher - obwohl sie ohne Rücksicht auf ihre Ursprungsadressen installiert werden können - nach dem In-Betrieb-Setzen des Systems unter Berücksichtigung verschiedener Auswahlkriterien gezielt über ihre Betriebsadressen angewählt werden können.

Allerdings haben das bekannte System sowie das Verfahren zum In-Betrieb-Setzen des Systems insbesondere bei großen Gebäuden mit vielen Verbrauchern den Nachteil, daß ein Verbraucher, der sich identifiziert hat -z.B. eine Leuchte die hellgesteuert wurde - im ganzen Gebäude gesucht werden muß und es keinen Anhaltspunkt gibt, wo die Suche begonnen werden soll, da die Anwahl der Verbraucher über ihre Ursprungsadressen vom Befehlsgeber gemäß Schritt b) des bekannten Verfahrens praktisch zufällig erfolgt.

Der vorliegenden Erfindung liegt die Aufgabe zugrunde, ein das Steuersystem und das Verfahren zum In-Funktion-Setzen des Steuersystems dahingehend zu verbessern, daß der vorstehend geschilderte Nachteil vermieden und das In-Betriebs-Setzen vereinfacht und zeitlich verkürzt wird.

Die Aufgabe wird erfindungsgemäß mit den in den unabhängigen Ansprüchen 1, 3, 4 und 9 angegebenen Merkmalen gelöst.

Abweichend von dem bekannten Steuersystem und dem Verfahren zum In-Betrieb-Setzen desselben, wird bei dem neuen Steuersystem und dem Verfahren zu seinem In-Betrieb-Setzen nicht mehr die Gesamtheit der Verbraucher überwacht, sondern jeweils nur noch ein ausgewählter Verbraucher. Für diesen wird die zugeordnete Betriebsadresse in dem Befehlsgeber voreingestellt. Dann werden die Verbraucher nacheinander über ihre Ursprungsadressen aufgefordert, sich zu identifizieren. Wenn der ausgewählte Verbraucher sich identifiziert, wird ihm seine Betriebsadresse übertragen. Das Überwachen des ausgewählten Verbrauchers und das Übertragen der ihm zugeordneten Betriebsadresse können automatisch erfolgen. Es liegt auf der Hand, daß damit das bisher notwendige Suchen des sich identifizierenden Verbrauchers entfallen kann und daß durch die Voreinstellung der Betriebsadresse im Befehlsgeber sowie die mögliche automatische Verknüpfung von Überwachung und Übertragung der voreingestellten Betriebsadresse erheblich Zeit gespart werden kann.

Anspruch 2 betrifft eine zweckmäßige Ausgestaltung des Steuersystems nach Anspruch 1, insbesondere für den Fall, daß die Verbraucher Leuchten sind.

Mit den in den Ansprüchen 5, 7 und 8 angegebenen Maßnahmen kann das Verfahren gemäß Anspruch 4 abgekürzt werden. Anspruch 6 betrifft eine Maßnahme, die dem Fall Rechnung trägt, daß nach der ersten Aufforderung des Befehlsgebers an die Verbraucher, ihre Ursprungsadressen zu senden, nicht alle Ursprungsadressen fehlerlos empfangen und gespeichert werden.

Anspruch 9 betrifft eine Alternative zu dem Verfahren gemäß Anspruch 4, gemäß der es nicht mehr erforderlich ist, daß der Befehlsgeber zunächst eine Liste aller Ursprungsadressen speichert.

Mit der Maßnahme gemäß Anspruch 10 kann das Verfahren gemäß Anspruch 9 abgekürzt sein.

Die Ansprüche 11 und 12 betreffen den für beide Verfahrensvarianten relevanten Fall, daß sich die Verbraucher durch ein optisch wahrnehmbares Identifizierungssignal identifizieren. Im Falle einer Leuchte kann deren Identifizierung beispielsweise durch Veränderung ihrer Helligkeit bewirkt werden, und zwar durch Ein, Ausschalten oder Dimmen.

Anspruch 12 betrifft die ebenfalls für beide Verfahrensvarianten gegebene Möglichkeit, den Zeitaufwand durch Automatisierung abzukürzen.

Es ist auch noch die Variante denkbar, daß jeder Verbraucher mit einem von außen zugänglichen Empfänger, beispielsweise einem Lichtsensor in Form einer Fotodiode versehen ist. Dem ausgewählten Verbraucher kann dann über einen außerhalb des Systems befindlichen Sender, beispielsweise einen auf die Fotodiode gerichteten Lichtgeber, der Befehl übermittelt werden, die Ursprungsadresse an den Befehlsgeber zu senden, worauf der Befehlsgeber dann sofort die voreingestellte Betriebsadresse an den ausgewählten Verbraucher übermittelt. In diesem Fall kann der Identifizierungssignal-Detektor mit Zieleinrichtung entfallen.

Weiterhin ist denkbar, daß dem zuletzt beschriebenen, von außen zugänglichen Empfänger des ausgewählten Verbrauchers über den außerhalb des Systems befindlichen Sender, beispielsweise dem Lichtgeber, die Betriebsadresse direkt zugeführt wird, indem der Lichtstrahl entsprechend durch Modulation codiert wird.

Die beiden zuletzt beschriebenen Möglichkeiten erfordern jedoch mindestens ein zusätzliches Bauteil an jedem Verbraucher, nämlich den von außen zugänglichen Empfänger.

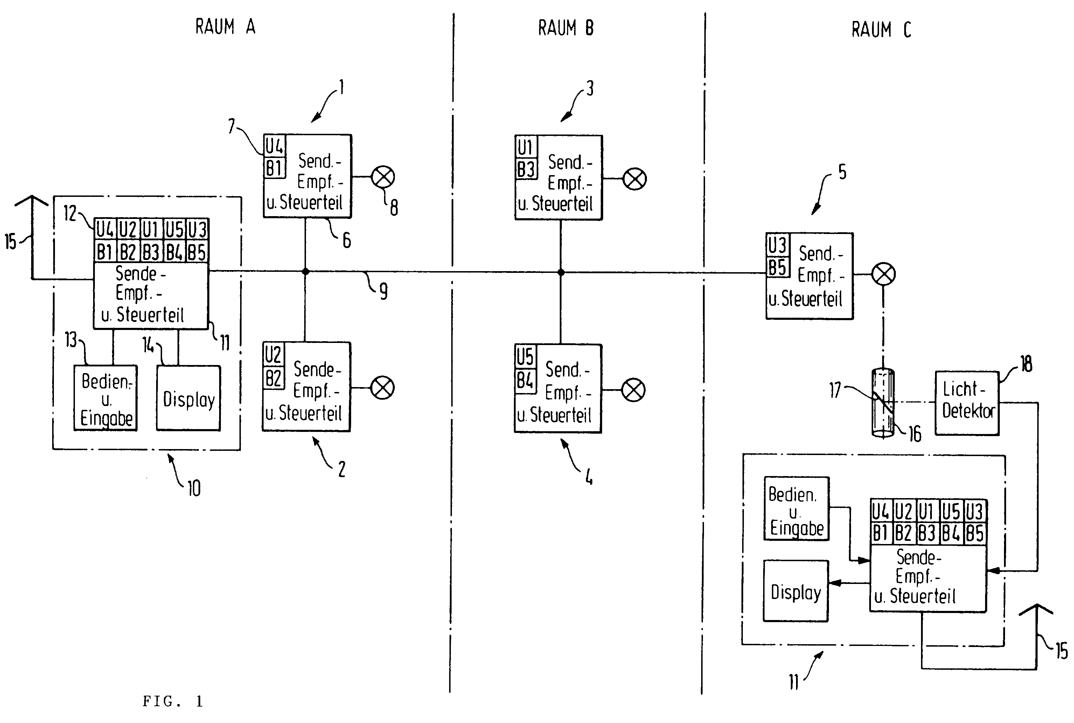

Ein Ausführungsbeispiel der Erfindung wird nachfolgend anhand der Zeichnung beschrieben.

Die einzige Figur zeigt drei Räume A, B und C. In Raum A sind zwei Verbraucher 1 und 2 installiert. In Raum B sind zwei Verbraucher 3 und 4 installiert. In Raum C ist ein einziger Verbraucher 5 installiert. Die Verbraucher 1 bis 5 sind aus Gründen der vereinfachten Darstellung identisch, und es wird nur der Verbraucher 1 beschrieben. Die Verbraucher können aber auch unterschiedlich sein.

Der Verbraucher 1 ist eine Leuchte, bestehend aus einem Sende- Empfangs- und Steuerteil 6, das einen Speicher 7 enthält und eine Lampe 8 steuert.

Die Verbraucher 1 bis 5 sind über eine gemeinsame Steuerleitung (Bus) mit einem Befehlsgeber 10 verbunden.

Der Befehlsgeber 10 besteht aus einem Sende- Empfangs- und Steuerteil 11 mit einem Speicher 12. Mit dem Sende- Empfangs- und Steuerteil 11 sind ein Bedien- und Eingabeteil 13 und ein Display 14 verbunden.

Der Befehlsgeber 10 ist in Raum A fest installiert.

In Raum C befindet sich ein mobiler Befehlsgeber 11, der im Prinzip gleich aufgebaut ist wie der Befehlsgeber 10. Eine Beschreibung kann daher entfallen. Die beiden Befehlsgeber 10 und 11 sind drahtlos miteinander gekoppelt, beispielsweise über eine Antenne 15, die Befehlsgeber 10 und 11 können aber auch über den Bus miteinander gekoppelt sein. In diesem Fall sind Bussteckdosen vorgesehen, an denen der mobile Befehlsgeber an den Bus gehängt werden kann.

Zunächst wird der Verbraucher 5 zur Überwachung auf seine Identifizierung ausgewählt. Er ist also der "ausgewählte" Verbraucher. Dazu wird die Lampe mit einem Zielgerät 16 nach Art eines Fernrohres anvisiert. Das Zielgerät 16 enthält einen halbdurchlässigen Spiegel 17, mit dem von der Lampe kommendes Licht auf einen Lichtdetektor 18 gelenkt wird. Dieser erzeugt daraus ein Identifizierungssignal, welches dem Befehlsgeber 11 zugeführt wird.

Nachfolgend soll eine erste Variante zum In-Betrieb-Setzen des vorstehend beschriebenen Steuersystems erläutert werden.

Vor der Installierung wird in die Speicher 7 der fünf Verbraucher 1 bis 5 jeweils eine Ursprungsadresse eingeschrieben. So enthält der Verbraucher 1 die Ursprungsadresse U4, der Verbraucher 2 die Ursprungsadresse U2, der Verbraucher 3 die Ursprungsadresse U1, der Verbraucher 4 die Ursprungsadresse U5 und der Verbraucher 5 die Ursprungsadresse U3. Danach werden die fünf Verbraucher in den drei Räumen A, B, C in der dargestellten Weise installiert, und zwar ohne Rücksicht auf ihre Ursprungsadressen. Nach der Installierung werden die fünf Verbraucher 1 bis 5 über eine gemeinsame Steuerleitung 9 mit dem Befehlsgeber 10 verbunden.

Der Speicher 12 des Befehlsgebers enthält zunächst noch keine Adressen.

Nunmehr wird der Befehlsgeber 10 über das Bedien- und Eingabeteil 13 veranlaßt, die Verbraucher 1 bis 5 aufzufordern, ihre Ursprungsadressen zu senden. Die gesendeten Ursprungsadressen U1 bis U5 werden im Speicher 12 des Befehlsgebers 10 gespeichert.

Wenn es auf der gemeinsamen Steuerleitung 9 bei der Sendung der Ursprungsadressen zu einer Datenkollision kommt, speichert der Befehlsgeber 10 nur die fehlerlos übertragenen Ursprungsadressen und wiederholt dann die Aufforderung an die Verbraucher zur Sendung der Ursprungsadressen bis im Befehlsgeber 10 alle Ursprungsadressen U1 bis U4 gespeichert sind.

Der nächste Schritt ist, daß ein Verbraucher ausgewählt wird. Dieser Verbraucher ist im vorliegenden Fall der im Raum C befindliche Verbraucher 5. Dazu wird das Zielgerät 16 auf die Lampe gerichtet. Ferner wird in den mobilen Befehlsgeber 11 eine Betriebsadresse für den Verbraucher 5 voreingegeben, die im vorliegenden Fall B5 ist. Die Betriebsadresse erlaubt es später, den Verbraucher gezielt in dem betreffenden Raum an seinem Installationsort anzuwählen, und zwar, wenn gewünscht, im Rahmen einer Gruppe von Verbrauchern.

Nun wird der Befehlsgeber 11 (und wegen der Funkverbindung damit auch der Befehlsgeber 10) über den Bedien- und Eingabeteil veranlaßt, die gespeicherten Ursprungsadressen U4, U2, U1, U5, U3 der Reihe nach anzuwählen und die zugeordneten Verbraucher zur Identifizierung aufzufordern. Anstelle der genannten Reihenfolge kann auch jede andere Reihenfolge treten.

Die Identifizierung erfolgt im vorliegenden Fall durch Reduzieren (Dimmen) der Helligkeit der Lampe. Zunächst wird also die Lampe des Verbrauchers 4, dann die Lampe des Verbrauchers 2, dann die Lampe des Verbrauchers 1 und dann die Lampe des Verbrauchers 5 zum Zwecke der Identifizierung herabgedimmt. Wenn die Verminderung der Helligkeit der Lampe des Verbrauchers 5 von dem Lichtdetektor 18 festgestellt wird, meldet er dies dem Befehlsgeber 11. Dieser gibt daraufhin automatisch die voreingestellte Betriebsadresse B5 an die Steuerleitung 9 ab, so daß der ausgewählte Verbraucher 5 diese empfangen und speichern kann.

Zweckmäßigerweise wird an dieser Stelle der vorstehend beschriebene Vorgang des aufeinanderfolgenden Identifizierens der Verbraucher abgebrochen, um das Verfahren abzukürzen.

Ebenfalls zweckmäßigerweise wird die Ursprungsadresse U3 des Verbrauchers 5 aus der Liste derjenigen Verbraucher eliminiert, die beim nächsten Durchgang wieder zur Identifizierung aufgefordert werden.

Nunmehr werden der mobile Befehlsgeber 11 mit dem Zielgerät 16 und dem Lichtdetektor 18 beispielsweise in den Raum B verlegt, um dort den Verbraucher 4 als "ausgewählten" Verbraucher zu überwachen.

Es wird nunmehr in den Befehlsgeber 11 für den Verbraucher 4 die Betriebsadresse B4 voreingegeben. Dann wird der vorstehend beschriebene Vorgang wiederholt, daß sämtliche Verbraucher (vorzugsweise mit Ausnahme des Verbrauchers 5) zur Identifizierung aufgefordert werden. Wenn sich der Verbraucher 4 identifiziert, wird der Identifizierungsvorgang abgebrochen, und es wird an den Verbraucher 4 automatisch die voreingestellte Betriebsadresse B4 übertragen und dort gespeichert.

Nachdem in alle Verbraucher in der vorstehend beschriebenen Weise eine Betriebsadresse eingeschrieben worden ist, kann jeder Verbraucher ggf. mit anderen Verbrauchern gezielt über seine Betriebsadresse angewählt werden.

Nachfolgend soll nunmehr eine zweite Verfahrensvariante beschrieben werden, die sich von der zuerst beschriebenen Verfahrensvariante dadurch unterscheidet, daß das Speichern sämtlicher Ursprungsadressen im Befehlsgeber zu Beginn des Verfahrens entfallen kann.

Für den ersten "ausgewählten" Verbraucher 5 wird zunächst die zugeordnete Betriebsadresse B5 in den Befehlsgeber 11 voreingegeben. Dann wird der Befehlsgeber 11 veranlaßt, alle Verbraucher aufzufordern, ihre Ursprungsadressen zu senden. Die zuerst fehlerlos empfangene Ursprungsadresse oder eine von dem Befehlsgeber aus mehreren fehlerlos empfangenen Ursprungsadressen ausgewählte Ursprungsadresse wird von dem Befehlsgeber gespeichert. Die gespeicherte Ursprungsadresse wird dann angewählt, und der zugehörige Verbraucher aufgefordert, sich zu identifizieren.

Beispielsweise wird zunächst die Ursprungsadresse U 5 als erste fehlerlos empfangen und von dem Befehlsgeber gespeichert. Diese Ursprungsadresse U5 wird nunmehr angewählt, wodurch sich der Verbraucher 4 identifiziert. Da der Lichtdetektor 18, der den ausgewählten Verbraucher 5 überwacht, keine Identifizierung meldet, wird über die Ursprungsadresse U5 an den Verbraucher 4 der Befehl erteilt, sich beim nächsten Aufruf, die Ursprungsadresse zu senden, nicht mehr zu beteiligen.

Beim nächsten Aufruf zur Sendung der Ursprungsadresse wird nunmehr beispielsweise die Ursprungsadresse U3 als erste fehlerlos empfangen und vom Befehlsgeber gespeichert. Damit erfolgt eine Identifizierung des Verbrauchers 5, die von dem Lichtdetektor 18 gemeldet wird. Daraufhin wird unter der Ursprungsadresse U3 automatisch an den Verbraucher 5 die Betriebsadresse B5 übertragen. Ferner wird dem Verbraucher 5 mitgeteilt, daß er sich beim nächsten Aufruf zur Sendung der Ursprungsadressen nicht mehr beteiligen soll, und an alle anderen Verbraucher ergeht die Mitteilung, daß ein früherer Befehl, die Ursprungsadresse nicht mehr zu senden, aufgehoben ist (dies betrifft im vorliegenden Fall den Verbraucher 4).

Nunmehr werden das Zielgerät 16, der Lichtdetektor 18 und der mobile Befehlsgeber 11 wiederum in den Raum B verlegt, um beispielsweise den Verbraucher 4 als "ausgewählten" Verbraucher auf seine Identifizierung hin zu überwachen. Das für den Verbraucher 5 beschriebene Verfahren wird nun für den Verbraucher 4 wiederholt, wobei der Verbraucher 5 auf eine Aufforderung zur Sendung der Ursprungsadressen diese endgültig unbeachtet läßt.

Die vorstehend beschriebenen Schritte werden solange wiederholt, bis in sämtliche Verbraucher eine Betriebsadresse eingeschrieben ist.

Abschließend sei noch bemerkt, daß die beiden Befehlsgeber 10 und 11 sich immer gegenseitig abgleichen, d.h. auf dem gleichen Speicherstand sind. Es versteht sich, daß die beschriebenen Verfahren auch nur mit einem einzigen Befehlsgeber durchgeführt werden können. Es ist auch denkbar, daß nur einer der beiden Befehlsgeber einen Speicher hat und der andere auf diesen Speicher durch Fernwirkung (z.B. Funk, Bus ...) Zugriff nimmt.

Hinzuweisen ist noch darauf, daß die Betriebsadresse in den Speicher eines Verbrauchers neben der Ursprungsadresse eingeschrieben werden kann, oder an deren Stelle, wodurch die Ursprungsadresse gelöscht wird.

Außerdem kann vorgesehen sein, daß die Betriebsadressen nicht von Hand eingestellt werden müssen, sondern aus einer elektronisch gespeicherten Liste gelesen werden, oder daß die Betriebsadressen automatisch inkrementiert oder dekrementiert werden.

Ferner ist vorteilhaft, wenn beim In-Betrieb-Setzen der Befehlsgeber lediglich die Verbraucher auffordert ihre Ursprungsadressen zu senden, die noch keine Betriebsadressen gespeichert haben. Dies beschleunigt vor allem die Inbetriebnahme von nachträglich an die Anlage angeschlossenen Verbraucher.

## Patentansprüche

1. Steuersystem für mehrere verteilt anzuordnende Verbraucher (1-5), insbesondere Leuchten in einem oder mehreren Räumen,
wobei jeder Verbraucher einen Sender, einen Empfänger und einen Speicher aufweist, mit mindestens einem einen Sender, einen Empfänger und einen Speicher aufweisenden Befehlsgeber (10, 11),
mit einer Steuerleitung (9), welche den Befehlsgeber (10, 11) mit jedem Verbraucher (1-5) verbindet,
wobei in den Speicher (7) jedes Verbrauchers (1-5) vor In-Betrieb-Setzen des Systems eine Ursprungsadresse (U4, U2, U1, U5, U3) eingeschrieben wird, die nach Anwahl durch den Befehlsgeber (10, 11) eine Identifizierung des Verbrauchers (1-5) erlaubt, und
wobei in den Speicher (7) nach In-Betrieb-Setzen des Systems und nach Identifizierung des Verbrauchers (1-5) eine Betriebsadresse (B1-B5) einschreibbar ist, die einer bestimmten Gruppierung und/oder Anordnung der Verbraucher (1-5) nach Installierung des Systems Rechnung trägt,
**gekennzeichnet durch**
einen mit dem Befehlsgeber (10, 11) verbundenen Identifizierungs-Detektor (18), mittels welchem die Identifizierung jeweils eines ausgewählten Verbrauchers (5) feststellbar ist und mittels welchem der Befehlsgeber (10, 11) bei Identifizierung des ausgewählten Verbrauchers (5) zum Schreiben der dem ausgewählten Verbraucher (5) zugeordneten und in dem Befehlsgeber (10, 11) voreingestellten Betriebsadresse (B5) in den Speicher (7) des Verbrauchers (5) veranlaßt wird.

2. Steuersystem nach Anspruch 1,
**dadurch gekennzeichnet,**
daß der Identifizierungs-Detektor (18) in Bezug auf optische Identifizierungssignale, insbesondere Helligkeits-Änderungen von Leuchten empfindlich ist und eine optische Zieleinrichtung (16, 17) aufweist, mittels welcher der ausgewählte Verbraucher (5) anvisierbar ist.

3. Steuersystem für mehrere verteilt anzuordnende Verbraucher (1-5), insbesondere Leuchten in einem oder mehreren Räumen,
wobei jeder Verbraucher einen Sender, einen Empfänger und einen Speicher aufweist, mit mindestens einem einen Sender, einen Empfänger und einen Speicher aufweisenden Befehlsgeber (10, 11),
mit einer Steuerleitung (9), welche den Befehlsgeber (10, 11) mit jedem Verbraucher (1-5) verbindet,
wobei in den Speicher (7) jedes Verbrauchers (1-5) vor In-Betrieb-Setzen des Systems eine Ursprungsadresse (U4, U2, U1, U5, U3) eingeschrieben wird, die nach Anwahl durch den Befehlsgeber (10, 11) eine Identifizierung des Verbrauchers (1-5) erlaubt, und
wobei in den Speicher (7) nach In-Betrieb-Setzen des Systems und nach Identifizierung des Verbrauchers (1-5) eine Betriebsadresse (B1-B5) einschreibbar ist, die einer bestimmten Gruppierung und/oder Anordnung der Verbraucher (1-5) nach Installierung des Systems Rechnung trägt,
**dadurch gekennzeichnet, daß**
jeder Verbraucher (1-5) mit einem von außen zugänglichen Empfänger, beispielsweise einem Lichtsensor in Form einer Fotodiode versehen ist,
mittels welchem dem ausgewählten Verbraucher (5) über einen außerhalb des Systems befindlichen Sender, beispielsweise über einen auf die Fotodiode gerichteten Lichtgeber, der Befehl übermittelbar ist, die Ursprungsadresse (U3) an den Befehlsgeber (10, 11) zu senden, worauf der Befehlsgeber (10, 11) dann an den ausgewählten Verbraucher (5) die voreingestellte Betriebsadresse (B5) zum Schreiben in den Speicher (7) des Verbrauchers (5) übermittelt, oder
mittels welchem dem ausgewählten Verbraucher (5) über einen außerhalb des Systems befindlichen Sender, beispielsweise über einen auf die Fotodiode gerichteten Lichtgeber, die Betriebsadresse (B5) zum Schreiben in den Speicher (7) des Verbrauchers (5) direkt zuführbar ist, indem der Lichtstrahl vom Lichtgeber zur Fotodiode entsprechend durch Modulation codiert wird.

4. Verfahren zum In-Betrieb-Setzen eines Steuersystems (8) für mehrere verteilt anzuordnende Verbraucher (1-5), insbesondere Leuchten in einem oder mehreren Räumen (A, B, C), welche Verbraucher (1-5) eine Ursprungsadresse (U4, U2, U1, U5, U3) gespeichert haben und nach ihrer ohne Rücksicht auf die Ursprungsadresse vorgenommenen Installierung von mindestens einem Befehlsgeber (10, 11) über eine gemeinsame Steuerleitung (9) steuerbar sein sollen, mit folgenden Schritten:
a) der Befehlsgeber (10, 11) fordert alle Verbraucher (1-5) auf, ihre Ursprungsadresse (U4, U2, U1, U5, U3) zu senden und speichert diese Ursprungsadressen,
b) es wird ein Verbraucher (5) ausgewählt und in den Befehlsgeber (10, 11) eine dem ausgewählten Verbraucher (5) zugeordnete Betriebsadresse (B5) voreingegeben,
c) von dem Befehlsgeber (10, 11) werden nacheinander verschiedene Ursprungsadressen mit dem Befehl angewählt, daß die zugehörigen Verbraucher (1-5) ein von außen wahrnehmbares Identifizierungssignal abgeben sollen,
d) der ausgewählte Verbraucher (5) wird von außen auf seine Identifizierung überwacht,
e) nach Identifizierung des ausgewählten Verbrauchers (5) wird die voreingegebene Betriebsadresse (B5) an den ausgewählten Verbraucher (5) zur Speicherung übertragen,
f) die Schritte b) bis e) werden mit einem anderen ausgewählten Verbraucher wiederholt bis an alle Verbraucher (1-5) eine Betriebsadresse (B1-B5) übertragen worden ist.

5. Verfahren nach Anspruch 4,
**dadurch gekennzeichnet,**
daß Schritt c) nach Identifizierung des ausgewählten Verbrauchers (1-5) abgebrochen wird.

6. Verfahren nach Anspruch 4 oder 5,
**dadurch gekennzeichnet,**
daß Schritt a) wiederholt wird, wenn von dem Befehlsgeber (10, 11) nicht alle Ursprungsadressen fehlerlos empfangen und gespeichert worden sind, und daß die Wiederholung solange vorgenommen wird, bis alle Ursprungsadressen im Befehlsgeber (10, 11) gespeichert sind.

7. Verfahren nach einem der Ansprüche 4 bis 6,
**dadurch gekennzeichnet,**
daß nach Ausführung von Schritt e) die Ursprungsadresse des ausgewählten Verbrauchers (1-5) im Befehlsgeber (10,11) gelöscht wird.

8. Verfahren nach einem der Ansprüche 4 bis 7,
**dadurch gekennzeichnet,**
daß die Ursprungsadressen für Schritt c) nach einem bestimmten Programm oder beliebig aus der Liste der im Befehlsgeber (10, 11) gespeicherten Ursprungsadressen ausgewählt wird.

9. Verfahren zum In-Betrieb-Setzen eines Steuersystems für mehrere verteilt anzuordnende Verbraucher (1-5), insbesondere Leuchten (8) in einem oder mehreren Räumen (A, B, C), welche Verbraucher eine Ursprungsadresse (U4, U2, U1, U5, U3) gespeichert haben und nach ihrer ohne Rücksicht auf die Ursprungsadresse vorgenommenen Installierung von mindestens einem Befehlsgeber (10, 11) über eine gemeinsame Steuerleitung (9) steuerbar sein sollen, mit folgenden Schritten:
a) in den Befehlsgeber (10, 11) wird eine dem ausgewählten Verbraucher (5) zugeordnete Betriebsadresse (B5) voreingegeben,
b) der Befehlsgeber (10, 11) fordert alle Verbraucher (1-5) auf, ihre Ursprungsadressen zu senden und speichert eine oder die zuerst fehlerlos empfangene Ursprungs adresse,
c) der Befehlsgeber (10, 11) wählt die gespeicherte Ursprungsadresse mit dem Befehl an, daß der zugehörige Verbraucher ein von außen wahrnehmbares Identifizierungssignal abgeben soll,
d) der ausgewählte Verbraucher (5) wird von außen auf seine Identifizierung überwacht,
e) die Schritte b) bis d) werden solange wiederholt, bis sich der ausgewählte Verbraucher (5) identifiziert, und es wird ihm dann die voreingestellte Betriebsadresse zur Speicherung übertragen,
f) die Schritte a) bis e) werden mit einem anderen ausgewählten Verbraucher wiederholt, bis an alle Verbraucher (1-5) eine Betriebsadresse übertragen worden ist.

10. Verfahren nach Anspruch 9,
**dadurch gekennzeichnet,**
daß der Befehlsgeber (10, 11) dem der jeweils zuerst empfangenen Ursprungsadresse zugeordneten Verbraucher den Befehl erteilt die nächsten Aufforderungen des Befehlsgebers (10, 11) zur Sendung der Ursprungsadressen solange zu ignorieren, wie keine Aufhebung dieses Befehls erfolgt, und daß dieser Befehl von dem Befehlsgeber nach Identifizierung eines Verbrauchers (1-5) aufgehoben wird.

11. Verfahren nach einem der Ansprüche 4 bis 10,
**dadurch gekennzeichnet,**
daß sich die Verbraucher (1-5) durch ein von außen optisch wahrnehmbares Identifizierungssignal identifizieren.

12. Verfahren nach Anspruch 11,
**dadurch gekennzeichnet,**
daß bei Verwendung einer Leuchte (8) als Verbraucher zu deren Identifizierung ihre Helligkeit verändert wird, beispielsweise durch Ein- oder Ausschalten oder Dimmen.

13. Verfahren nach einem der Ansprüche 4 bis 12,
**dadurch gekennzeichnet,**
daß die Überwachung des ausgewählten Verbrauchers (5) und die Übertragung der voreingestellten Betriebsadresse (B5) nach dessen Identifizierung automatisch vorgenommen wird.

## Claims

1. Control system for several distributed consumers (1-5), in particular lamps in one or more rooms,
in which each consumer comprises a transmitter, a receiver and a storage device, with at least one central controller (10, 11) comprising a transmitter, a receiver and a storage device,
with a control line (9) which connects the central controller (10, 11) to each consumer (1-5),
in which there is written into the storage device (7) of each consumer (1-5) before the system is put into operation an original address (U4, U2, U1, U5, U3), which permits after selection by the central controller (10, 11) an identification of the consumer (1-5), and
in which there can be written into the storage device (7) after the system has been put into operation and after the consumer (1-5) has been identified an operating address (B1-B5), which takes into account a particular grouping and/or arrangement of the consumers (1-5) after the system has been installed,
characterised by
an identification detector (18) connected to the central controller (10, 11), by means of which the identification of a particular selected consumer (5) is detectable and by means of which the central controller (10, 11) is on identification of the selected consumer (5) caused to write into the storage device (7) of the consumer (5) the operating address (B5) assigned to the selected consumer (5) and preset in the central controller (10, 11).

2. Control system according to claim 1,
characterised in that
the identification detector (18) is sensitive with respect to optical identification signals, in particular variations in brightness of lamps, and comprises an optical sighting device (16, 17) by means of which the selected consumer (5) is sighted.

3. Control system for several distributed consumers (1-5), in particular lamps in one or more rooms,
in which each consumer comprises a transmitter, a receiver and a storage device, with at least one central controller (10, 11) comprising a transmitter, a receiver and a storage device,
with a control line (9) which connects the central controller (10, 11) to each consumer (1-5),
in which there is written into the storage device (7) of each consumer (1-5), before the system is put into operation, an original address (U4, U2, U1, U5, U3), which permits after selection by the central controller (10, 11) an identification of the consumer (1-5), and in which there can be written into the storage device (7) after the system has been put into operation and after the consumer (1 -5) has been identified an operating address (B1-B5), which takes account of a particular grouping and/or arrangement of the consumers (1-5) after the system has been installed,
characterised in that
each consumer (1-5) is provided with a receiver accessible from the outside, for example a light sensor in the form of a photodiode,
by means of which there is transmittable to the selected consumer (5) via a transmitter located outside the system, for example via a light transmitter directed onto the photodiode, the command to transmit the original address (U3) to the central controller (10, 11),
whereupon the central controller (10, 11) then transmits to the selected consumer (5) the preset operating address (B5) for writing into the storage device (7) of the consumer (5), or
by means of which there is directly suppliable to the selected consumer (5) via a transmitter located outside the system, for example via a light transmitter directed onto the photodiode, the operating address (B5) for writing into the storage device (7), by the light beam from the light transmitter to the photodiode being suitably coded by modulation.

4. Method for putting into operation a control system (8) for several distributed consumers (1-5), in particular lamps in one or more rooms (A, B, C), which consumers (1-5) have stored an original address (U4, U2, U1, U5, U3) and after they have been installed without regard to the original address are to be controllable by at least one central controller (10, 11) via a common control line, with the following steps:
a) the central controller (10, 11) requests all the consumers (1-5) to transmit their original addresses (U4, U2, U1, U5, U3) and stores said original addresses,
b) a consumer (5) is selected and an operating address (B5) assigned to the selected consumer (5) is pre-loaded into the central controller (10, 11),
c) various original addresses are selected successively by the central controller (10, 11) with the command that the associated consumers (1-5) are to emit an identification signal perceptible from the outside,
d) the selected consumer (5) is checked for its identification from the outside,
e) after identification of the selected consumer (5) the pre-loaded operating address (B5) is transmitted to the selected consumer (5) for storage,
f) steps b) to e) are repeated with another selected consumer until an operating address (B1-B5) has been transmitted to all the consumers (1-5).

5. Method according to claim 4,
characterised in that
step c) is interrupted after identification of the selected consumer (1-5).

6. Method according to claim 4 or 5,
characterised in that
step a) is repeated if not all of the original addresses have been received and stored error-free by the central controller (10, 11), and that the repetition is undertaken until such time as all the original addresses are stored in the central controller (10, 11).

7. Method according to claims 4 to 6,
characterised in that
after the execution of step e) the original address of the selected consumer (1-5) is erased in the central controller (10, 11).

8. Method according to one of claims 4 to 7,
characterised in that the original addresses for step c) is (sic) selected according to a particular program or at random from the list of the original addresses stored in the central controller (10, 11).

9. Method for putting into operation a control system (8) for several distributed consumers (1-5), in particular lamps (8) in one or more rooms (A, B, C), which consumers (1-5) have stored an original address (U4, U2, U1, U5, U3) and after they have been installed without regard to the original address are to be controllable by at least one central controller (10, 11) via a common control line, with the following steps:
a) an operating address (B5) assigned to the selected consumer (5) is pre-loaded into the central controller (10, 11),
b) the central controller (10, 11) requests all the consumers (1-5) to transmit their original addresses and stores a or the first original address received error-free,
c) the central controller (10, 11) selects the stored original address with the command that the associated consumer is to emit an identification signal perceptible from the outside,
d) the selected consumer (5) is checked for its identification from the outside,
e) steps b) to d) are repeated until such time as the selected consumer (5) identifies itself, and the preset operating address is then transmitted to it for storage,
f) steps a) to e) are repeated withe another selected consumer until an operating address has been transmitted to all the consumers (1-5).

10. Method according to claim 9,
characterised in that
the central controller (10, 11) issues to the consumer assigned to the respective original address received first of all the command to ignore the next requests of the central controller (10, 11) to send the original addresses until such time as a cancellation of said command does not take place, and that said command is cancelled by the central controller after identification of a consumer (1-5).

11. Method according to one of claims 4 to 10,,
characterised in that
the consumers (1-5) identify themselves by an identification signal optically perceptible from the outside.

12. Method according to claim 11,
characterised in that
when a lamp (8) is used as consumer its brightness is varied in order to identify it, for example by switching on or off or by dimming.

13. Method according to one of claims 4 to 12,
characterised in that
the checking of the selected consumer (5) and the transmission of the preset operating address (B5) is undertaken automatically after its identification.

## Revendications

1. Système de commande pour plusieurs charges (1-5) réparties, en particulier des appareils d'éclairage dans un ou plusieurs locaux,
chaque charge présentant un émetteur, un récepteur et une mémoire, avec au moins un transmetteur d'ordres (10, 11) présentant un émetteur, un récepteur, et une mémoire,
avec une ligne de commande (9) qui relie le transmetteur d'ordres (10, 11) à chaque charge (1-5),
une adresse d'origine (U4, U2, U1, U5, U3) étant inscrite dans la mémoire (7) de chaque charge (1-5) avant la mise en service du système, adresse qui permet une identification de la charge (1-5) après sélection par le transmetteur d'ordres (10, 11), et
une adresse de service (B1-B5) pouvant être inscrite dans la mémoire (7) après mise en service du système et après identification de la charge (1-5), cette adresse de service tenant compte d'un groupement et/ou agencement déterminé des charges (1-5) après installation du système,
**caractérisé par**
un détecteur d'identification (18) qui est relié au transmetteur d'ordres (10, 11), à l'aide duquel l'identification de chaque charge sélectionnée (5) est détectable et à l'aide duquel le transmetteur d'ordres (10, 11) est amené, lors de l'identification de la charge sélectionnée (5), à inscrire dans la mémoire de la charge (5) l'adresse de service (B5) associée à la charge (5) et pré-établie dans le transmetteur d'ordres (10, 11).

2. Système de commande suivant la revendication 1,
**caractérisé par le fait**
que le détecteur d'identification (18) est sensible à des signaux d'identification optiques, en particulier des variations de luminosité d'appareils d'éclairage et présentent un dispositif de visée optique (16, 17) à l'aide duquel la charge sélectionnée (5) peut être visée.

3. Système de commande pour plusieurs charges (1-5) réparties, en particulier des appareils d'éclairage dans un ou plusieurs locaux,
chaque charge présentant un émetteur, un récepteur et une mémoire, avec au moins un transmetteur d'ordres (10, 11) présentant un émetteur, un récepteur, et une mémoire,
avec une ligne de commande (9) qui relie le transmetteur d'ordres (10, 11) à chaque charge (1-5),
une adresse d'origine (U4, U2, U1, U5, U3) étant inscrite dans la mémoire (7) de chaque charge (1-5) avant la mise en service du système, adresse qui permet une identification de la charge (1-5) après sélection par le transmetteur d'ordres (10, 11), et
une adresse de service (B1-B5) pouvant être inscrite dans la mémoire (7) après mise en service du système et après identification de la charge (1-5), cette adresse de service tenant compte d'un groupement et/ou agencement déterminé des charges (1-5) après installation du système,
**caractérisé par le fait**
que chaque charge (1-5) est munie d'un récepteur accessible de l'extérieur, par exemple un détecteur de lumière sous la forme d'une photodiode,
à l'aide duquel l'ordre d'envoyer l'adresse d'origine (U3) au transmetteur d'ordres (10, 11) peut être transmis en passant par un émetteur se trouvant à l'extérieur du système, par exemple en passant par un transmetteur de lumière dirigé sur la photodiode, à la suite de quoi le transmetteur d'ordres (10, 11) transmet à la charge sélectionnée (5) l'adresse de service préétablie (P5) en vue de l'inscription dans la mémoire (7) de la charge (5), ou
à l'aide duquel l'adresse de service (B5) peut être envoyée directement, en passant par un émetteur se trouvant à l'extérieur du système, par exemple en passant par un transmetteur de lumière dirigé sur la photodiode, à la charge sélectionnée (5) en vue de l'inscription dans la mémoire (7) de la charge (5), par le fait que le rayon lumineux envoyé du transmetteur de lumière à la photodiode est codé de façon correspondante par modulation.

4. Procédé pour la mise en service d'un système de commande (8) pour plusieurs charges (1-5) réparties, en particulier des appareils d'éclairage dans un ou plusieurs locaux (A, B, C), lesquelles charges (1-5) comportent en mémoire chacune une adresse d'origine (U4, U2, U1, U5, U3) et doivent pouvoir être commandées, après leur installation effectuée sans tenir compte de l'adresse d'origine, par au moins un transmetteur d'ordres (10, 11), en passant par une ligne de commande commune (9), comprenant les étapes suivantes:
(a) le transmetteur d'ordres (10, 11) demande à toutes les charges (1-5) d'envoyer leur adresse d'origine (U4, U2, U1, U5, U3) et mémorise ces adresses d'origine,
(b) une charge (5) est sélectionnée et une adresse de service (B5) associée à la charge sélectionnée (5) est pré-établie dans le transmetteur d'ordres (10, 11),
(c) le transmetteur d'ordres (10, 11) sélectionne successivement différentes adresses d'origine avec l'ordre que les charges associées (1-5) doivent émettre un signal d'identification perceptible de l'extérieur,
(d) la charge sélectionnée (5) est surveillée de l'extérieur quant à son identification,
(e) après identification de la charge sélectionnée (5), l'adresse de service (B5) pré-établie est transmise à la charge sélectionnée (5) en vue de la mémorisation,
(f) les étapes (b) à (e) sont répétées avec une autre charge sélectionnée jusqu'à ce qu'une adresse de service (B1-B5) ait été transmise à toutes les charges (1-5).

5. Procédé suivant la revendication 4,
**caractérisé par le fait**
que l'étape (c) est interrompue après identification de la charge sélectionnée (1-5).

6. Procédé suivant la revendication 4 ou 5,
**caractérisé par le fait**
que l'étape (a) est répétée lorsque le transmetteur d'ordres (10, 11) n'a pas reçu sans erreur et mémorisé toutes les adresses d'origine et que la répétition est effectuée jusqu'à ce que toutes les adresses d'origine, soient mémorisées dans le transmetteur d'ordres (10, 11).

7. Procédé suivant l'une des revendications 4 à 6,
**caractérisé par le fait**
qu'après exécution de l'étape (e), l'adresse d'origine de la charge sélectionnée (1-5) est effacée dans le transmetteur d'ordres (10, 11).

8. Procédé suivant l'une des revendications 4 à 7,
**caractérisé par le fait**
que les adresses d'origine pour l'étape (c) sont sélectionnées suivant un programme déterminé ou de façon aléatoire à partir de la liste des adresses d'origine mémorisées dans le transmetteur d'ordres (10, 11).

9. Procédé de mise en service d'un système de commande pour plusieurs charges (1-5) réparties, en particulier des appareils d'éclairage (8) dans un ou plusieurs locaux (A, B, C), lesquelles charges comportent en mémoire chacune une adresse d'origine (U4, U2, U1, U5, U3) et doivent pouvoir être commandées, après leur installation effectuée sans tenir compte de l'adresse d'origine, par au moins un transmetteur d'ordres (10, 11) en passant par une ligne de commande commune (9), comprenant les étapes suivantes:
(a) une adresse de service (B5) associée à la charge sélectionnée (5) est introduite dans le transmetteur d'ordres,
(b) le transmetteur d'ordres (10,11) demande à toutes les charges (1-5) d'envoyer leurs adresses d'origine et mémorise une adresse d'origine ou l'adresse d'origine reçue en premier sans erreur,
(c) le transmetteur d'ordres (10,11) sélectionne l'adresse d'origine mémorisée avec l'ordre à la charge associée d'émettre un signal d'identification perceptible de l'extérieur,
(d) la charge sélectionnée (5) est surveillée de l'extérieur quant à son identification,
(e) les étapes (b) à (d) sont répétées jusqu'à ce que la charge sélectionnée (5) se soit identifiée, et l'adresse de service pré-établie est transmise à cette charge à des fins de mémorisation,
(f) les étapes (a) à (e) sont répétées avec une autre charge sélectionnée jusqu'à ce qu'une adresse de service ait été transmise à toutes les charges (1-5).

10. Procédé suivant la revendication 9,
**caractérisé par le fait**
que le transmetteur d'ordres (10, 11) délivre à la charge associée respectivement à l'adresse d'origine reçue en premier l'ordre d'ignorer les appels suivants du transmetteur d'ordres (10, 11) quant à l'envoi des adresses d'origine tant que cet ordre n'est pas annulé et que cet ordre est annulé par le transmetteur d'ordres après identification d'une charge (1-5).

11. Procédé suivant l'une des revendications 4 à 10,
**caractérisé par le fait**
que les charges (1-5) s'identifient par un signal d'identification perceptible optiquement de l'extérieur.

12. Procédé suivant la revendication 11,
**caractérisé par le fait**
que lors de l'utilisation d'un appareil d'éclairage (8) en tant que charge, l'identification de cet appareil s'effectue par variation de sa luminosité, par exemple par extinction ou allumage ou par variation progressive de la puissance lumineuse.

13. Procédé suivant l'une des revendications 4 à 12,
**caractérisé par le fait**
que la surveillance de la charge sélectionnée (5) et la transmission de l'adresse de service (B5) pré-établie, après identification de cette charge, s'effectuent automatiquement.
